# EUROPÄISCHE PATENTANMELDUNG

(11) **EP 2 130 631 A2**
(43) Veröffentlichungstag der Anmeldung: **09.12.2009**
(21) Anmeldenummer: 09159749.2
(22) Anmeldetag: 08.05.2009
(51) Int. Cl.: B23D 17/00, B23D 31/00

(54) **Verfahren und Vorrichtung zum Zerkleinern von voluminösen Metallteilen**

(30) Priorität: 03.06.2008 DE 102008002876
(71) Anmelder: Duesmann & Hensel Recycling GmbH, 63743 Aschaffenburg (DE)
(72) Erfinder: Hensel, Clemens, 63864 Glattbach (DE); Schmidt, Oleg, 63741 Aschaffenburg (DE)
(74) Vertreter: Stoffregen, Hans-Herbert

(57) **Zusammenfassung**

Die Erfindung bezieht sich auf ein Verfahren und eine Vorrichtung zum Zerkleinern von voluminösen Metallteilen (12) mittels einer Schereneinrichtung (10) umfassend eine eine erste Schneidkante (18) aufweisende feststehende Unterbacke (14) mit dieser zugeordneter horizontal verlaufender ersten Auflagefläche (22) für das Metallteil und eine zu der Unterbacke verschwenkbare eine zweite Schneidkante (20) aufweisende Oberbacke (16), wobei die Schneidkanten zu Beginn des Zerkleinerns eine V-Form bilden. Um ein problemloses Positionieren der Metallteile zwischen der Oberbacke und der Unterbacke zu ermöglichen, wird vorgeschlagen, dass das Metallteil (12) auf einer Auflage positioniert wird, die sich aus der ersten Auflagefläche (22) der Unterbacke (14) sowie einer seitlich neben dieser und in vertikaler Projektion unterhalb der Oberbacke (16) verlaufenden zweiten Auflagefläche (32) zusammensetzt, und dass die Oberbacke in Richtung der Unterbacke bei gleichzeitigem Verstellen der zweiten Auflagefläche zusammen mit der Oberbacke verstellt wird.

## Beschreibung

Die Erfindung bezieht sich auf ein Verfahren zum Zerkleinern von voluminösen Metallteilen, insbesondere von Kraftfahrzeug-Katalysatoren, mittels einer Schereneinrichtung umfassend eine eine erste Schneidkante aufweisende feststehende Unterbacke mit dieser zugeordneter horizontal verlaufender ersten Auflagefläche für das Metallteil und eine zu der Unterbacke verschwenkbare eine zweite Schneidkante aufweisende Oberbacke, wobei die Schneidkanten zu Beginn des Zerkleinerns eine V-Form bilden.

Auch nimmt die Erfindung Bezug auf eine Vorrichtung zum Zerkleinern eines Kraftfahrzeug-Katalysators umfassend eine eine erste Schneidkante aufweisende Unterbacke mit einer zugeordneten ersten Auflagefläche, eine zu der Unterbacke verschwenkbare Oberbacke mit einer zweiten Schneidkante sowie einen oberhalb des ersten Auflageabschnitts verlaufenden Niederhalter, wobei die erste und die zweite Schneidkante zu Beginn des Zerkleinerns eine V-Form bilden.

Fahrzeugkatalysatoren dienen der Abgasnachbehandlung in Fahrzeugen mit Verbrennungsmotoren, um Schadstoffemissionen im Abgas zu reduzieren. Typischer Aufbau von Fahrzeugkatalysatoren ist in ein aus Metall bestehendes Gehäuse, in dem ein aus Keramik oder Metallfolien bestehender Träger angeordnet ist, auf dem sich der sogenannte Washcoat befindet. In dem Washcoat sind katalytisch aktive Edelmetalle eingelagert, wie Platin, Rhodium und/oder Palladium. Zur Rückgewinnung der Edelmetalle erfolgt eine mechanisch Aufbereitung und chemische Verarbeitung. Zur mechanischen Aufbereitung werden die Gehäuse mit hydraulischen Scheren aufgeschnitten, um anschließend einen Aufschluss zu ermöglichen. Bei Metallträgerkatalysatoren werden die aufgeschnittenen Katalysatoren sodann z. B. in einem Querstromzerspaner zerkleinert, wobei entweder während des Zerkleinerns, bevorzugterweise jedoch nach dem Zerkleinern Edelmetallpartikel sowie kleinere aus dem Trägerkatalysator entstandene Partikel abgetrennt werden. Ein Abtrennen während des Zerkleinerns ist aus der DE-C-41 22 717 bekannt.

Das Durchtrennen der Katalysatoren kann mit einer hydraulischen Schere erfolgen, wie diese z. B. von der JMC-Recycling System Ltd., England, angeboten wird. Dabei weist die Schere eine feststehende Unterbacke mit Schneidkante, also ein Scherenunterteil und eine zu diesem verschwenkbare Oberbacke mit Schneidkante, also Scherenoberteil auf. Die Unterbacke weist eine Auflagefläche auf, um den zu durchtrennenden Katalysator positionieren zu können. Da sich die Auflagefläche allein entlang der Seite der Unterbacke erstreckt, die außerhalb der Schwenkbewegung der Oberbacke verläuft, besteht die Gefahr, dass dann, wenn der Katalysator zu weit über der Schneidkante der Unterbacke vorsteht, der Katalysator wegkippt. Daher wird üblicherweise der Katalysator von dem Bediener von Hand gehalten mit der Folge, dass beim Zerkleinern ein Quetschen der Hand erfolgen kann, sofern diese nicht rechtzeitig weggezogen wird; denn beim Schneiden wirken auf den Katalysator Kippkräfte ein, die dazuführen, dass der Katalysator in Richtung der Oberbacke verschwenkt wird, so dass in diesem Bereich eine Quetschgefahr erwächst.

Sollen mit einer entsprechenden Schneidvorrichtung kleine Gegenstände durchtrennt werden, so ist ein ordnungsgemäßes Positionieren grundsätzlich ohne Hilfsmittel nicht möglich. Daher werden nach dem Stand der Technik entsprechende Kleinteile z. B. mittels einer Zange festgehalten. Eine diesbezügliche Handhabung ist umständlich und birgt die Gefahr, dass die Zange selbst in den Schwenkbereich der Oberbacke gelangt.

Der DE-C-856 818 ist eine Schrottschere zu entnehmen, bei der die Schneidkante eines unteren Scherenmessers geneigt zur Horizontalen verläuft.

Um Metall oder Beton zu durchtrennen, wird nach der US-A-5,715,603 eine Schneidvorrichtung mit Unter- und Oberbacke sowie einem Dämpfungsglied vorgeschlagen, durch das verhindert werden soll, dass die Backen seitlich zueinander ausweichen.

Um Drahtbündel bzw. Drahtseile zu durchtrennen, sieht die DE-U-20 2004 012 247 eine Schneidvorrichtung vor, die horizontal verschwenkbare Schneidbacken umfasst, von denen eine mehrere zu einander beabstandete Ausnehmungen aufweist.

Eine Schrottschere insbesondere für Automobile ist aus der DE-A-31 36 832 bekannt. Die Schrottschere geht von einem Maschinengestell mit einer Mulde aus, in die das zu zerschneidende Automobil eingebracht wird. Zum Zerschneiden und Pressen ist eine gegabelte Pressbackeneinrichtung vorgesehen, die ein Hubteil und ein Schneideteil umfasst.

Eine Schrottschere für z. B. Behälter, Kessel oder Kraftwagenkarosserien nach der DE-C-845 438 umfasst einen in einem Maschinengestell in waagerechter Ebene verschiebbar geführten Messerschlitten auf, der eine nach oben frei zugängliche Einfüllöffnung begrenzt. Durch das Verstellen des Messerschlittens wird die Einfüllöffnung verringert, so dass diese die Funktion eines Vorquetschraums ausübt.

Um einen ein Gehäuse mit einem Boden umfassenden Ölfilter zu zerlegen, wird nach der DE-U-91 16 858 eine Vorrichtung vorgeschlagen, die ein Untermesser mit einer der Stärke des Bodens entsprechenden Dicke umfasst. Dicht über dem Untermesser ist verschwenkbar ein Obermesser angeordnet.

Der vorliegenden Erfindung liegt die Aufgabe zu Grunde, ein Verfahren sowie eine Vorrichtung der eingangs genannten Art so weiterzubilden, dass ein problemloses Positionieren der Metallteile wie Katalysatoren zwischen der Oberbacke und der Unterbacke erfolgen kann. Auch soll das Risiko reduziert werden, dass dann, wenn beim Schneidvorgang das Metallteil wie der Katalysator von Hand gehalten wird, diese gequetscht wird.

Erfindungsgemäß wird die Aufgabe durch ein Verfahren der eingangs genannten Art im Wesentlichen gelöst durch
- Positionieren des Metallteils auf einer Auflage, die sich aus der ersten Auflagefläche der Unterbacke sowie einer seitlich neben dieser und in vertikaler Projektion unterhalb der Oberbacke verlaufenden zweiten Auflagefläche zusammensetzt, und
- Verschwenken der Oberbacke in Richtung der Unterbacke bei gleichzeitigem vorzugsweise synchronen Verstellen der zweiten Auflagefläche zusammen mit der Oberbacke.

Abweichend von dem vorbekannten Verfahren wird eine Auflage zur Verfügung gestellt, die sich zu beiden Seiten der Schneidkante der Unterbacke erstreckt, so dass ein problemloses Positionieren des zu zerkleinernden Metallteils erfolgt, ohne dass die sich unmittelbar unterhalb der Oberbacke erstreckende Auflagefläche zu einer Behinderung beim Schneidvorgang führen. Dabei findet ein mit dem Schneidvorgang abgestimmtes Absenken der zweiten Auflagefläche statt, damit der Schneidraum freigegeben wird.

Es ist folglich durch die auch als Bettverbreiterung zu bezeichnende zweite Auflagefläche sichergestellt, dass beim Positionieren des Metallteils dieses nicht wegkippen und herunterfallen kann. Gleichzeitig wird der Schneidraum freigegeben, da die Bettverbreiterung, also die Auflagefläche, die sich unmittelbar unterhalb der Oberbacke erstreckt, den Schneidraum nicht einschränkt. Somit kann der Abstand zwischen der Auflagefläche, die z. B. durch eine Außenfläche eines L-Profils gebildet wird, und der Unterbacke, also dessen schneidseitig zugewandter Fläche, überaus gering gehalten werden.

Zur weitergehenden Positionierung und zur Sicherstellung, dass das Metallteil, bevor dieses zerkleinert wird, nicht unkontrolliert verschoben wird, ist vorgesehen, dass das Metallteil zu Beginn des Zerkleinerns zwischen den Schneidkanten der Unter- und Oberbacke fixiert wird, also in Richtung des Schnittbereichs der Schneidkanten geschoben und zwischen diesen festgeklemmt wird.

In eigenerfinderischer Ausgestaltung der Erfindung ist vorgesehen, dass synchron mit der Bewegung der Oberbacke ein Niederhalter verstellt wird, der sich von der Oberbacke ausgehend entlang des ersten Auflageabschnitts erstreckt. Hierdurch wird sichergestellt, dass die beim Schneidvorgang auf das Metallteil einwirkenden Kippkräfte nicht dazuführen können, dass das sich entlang des stationären Auflageabschnitts befindliche Teil derart gekippt wird, dass sich das Metallteil in Richtung der zugewandten Seite der Oberbacke mit der Folge bewegt, dass sich ein eine Quetschgefährdung bildender Abstand ergibt. Unabhängig hiervon stellt der mitlaufende Niederhalter sicher, dass ein Heraus- oder Wegspringen des Schnittgutes unterbleibt.

Der Niederhalter verläuft mit seinem der Auflage naheliegenden Bereich zu der Schneidkante der Oberbacke in einem Abstand a mit a ≥ 5 cm, insbesondere 5 cm ≤ a < 10 cm, um voluminöse bzw. sperrige Metallteile wie Kfz-Katalysatoren durchtrennen zu können, ohne dass der Niederhalter behindert, jedoch verhindert, dass das zu einer Quetschgefahr führende Kippen auftritt.

Sollte bevorzugterweise der Niederhalter starr mit der Oberbacke verbunden bzw. integral mit diesem ausgebildet sein, so besteht in Weiterbildung der Erfindung die Möglichkeit, dass der von der Oberbacke ausgehende Niederhalter in Schwenkbewegungsrichtung verstellbar gelagert von der Oberbacke ausgeht. Dieses Verstellen bzw. "Nachgeben" kann z. B. durch eine federnde Lagerung realisiert werden.

Eine Vorrichtung der eingangs genannten Art zeichnet sich dadurch aus, dass sich seitlich der ersten Schneidkante eine die erste Auflagefläche flächenmäßig erweiternde zweite absenkbare Auflagefläche erstreckt, die vorzugsweise in Wirkverbindung mit der Oberbacke steht, und/oder dass der Niederhalter synchron mitlaufend mit der Oberbacke ausgebildet ist und in Schwenkrichtung der Oberbacke auflagenseitig in einem Abstand a von der zweiten Schneidkante verläuft, wobei z. B. a ≥ 4 cm oder a ≥ 5 cm sein kann. Dabei ist der Niederhalter insbesondere ein von der Oberbacke seitlich abragender Vorsprung, der integral mit dieser ausgebildet sein kann. Alternativ besteht die Möglichkeit, dass der Niederhalter verstellbar in Schwenkbewegungsrichtung der Oberbacke in dieser gelagert ist. Dabei kann der Niederhalter auflagenabschnittsseitig strukturiert wie zahn- oder krallenartig ausgebildet sein, um das Schnittgut zu sichern.

Zwar ist es bekannt, zum Schneiden von Metallteilen eine Schere zu benutzen, bei der ein Niederhalter mit einem Obermesser verbunden ist. Allerdings handelt es sich bei den Metallteilen um flächige Gegenstände wie Bleche. Dabei erstreckt sich der Niederhalter in der Höhe der Schneidkante des Obermessers mit der Folge, dass sperrige Teile nicht durchtrennt werden können (DE-C-33 09 369).

Bei einer Tafelschere für Bleche nach der DE-U-1 884 150 ist ein verstellbarer Niederhalter vorgesehen, der vor Durchtrennen des Blechmaterials dieses fixiert. Eine entsprechende Konstruktion findet sich in der DE-B-1 502 879.

Ganz allgemein sind aus dem Stand der Technik zwei prinzipielle Lösungen für Niederhalter bekannt. So sind zum einen justierbare, jedoch beim Schnitt ortsfeste Niederhalter und zum anderen hydraulische Niederhalter, die sich vor dem Schnitt absenken, bekannt. Die statische Lösung hat den Nachteil, dass eine individuelle Anpassung für jede Größe des Schnittguts erfolgen muss und außerdem der Abstand zum Obermesser in der Regel sehr groß ist. Letzteres hat zur Folge, dass eine erhebliche Quetschgefahr besteht.

Automatische hydraulische Niederhalter zeigen per se eine Quetschgefahr, da sie mit entsprechender Kraft das Schneidgut halten müssen und bei entsprechendem Abstand zum Obermesser gerade dort schließen, wo der Bediener das Teil hält. Erfolgt jedoch ein Arretieren in der oberen Lage, so ergibt sich eine klassische Quetschstelle, da sich das Schneidgut genau zu diesem Bereich hin "aufbäumt".

All diese Nachteile werden durch den erfindungsgemäßen Niederhalter vermieden, da sich dieser hinreichend beabstandet zur Schneidkante zusammen mit der Oberbacke in Richtung des zu schneidenden Gutes bewegt, so dass eine individuelle Anpassung erfolgt.

Die zweite Auflagefläche der erfindungsgemäßen Vorrichtung, d. h. ein diese zur Verfügung stellendes Auflager wie Oberseite eines horizontal verlaufenden Schenkels eines L-Profils, ist vorzugsweise starr mit der Oberbacke verbunden, um ein einfaches synchrones Verstellen zwischen Oberbacke und dem Auflager, also der Bettverbreiterung zu ermöglichen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden Ausführungsbeispiels.

Es zeigen:
- Fig. 1: eine Vorderansicht einer erfindungsgemäßen Vorrichtung zum Zerkleinem von Metallteilen wie Katalysatoren,
- Fig. 2: eine Seitenansicht von Ober- und Unterbacke der Vorrichtung gemäß Fig. 1,
- Fig. 3: eine Prinzipdarstellung der Ober- und Unterbacke der Vorrichtung gemäß Fig. 1 mit zwischen diesen angeordnetem zu zerkleinernden Metallteil in Form eines Katalysators und
- Fig. 4: die der Fig. 3 entsprechende Prinzipdarstellung von Ober- und Unterbacke während eines Arbeitstaktes.

In den Figuren, in denen grundsätzlich gleiche Elemente mit gleichen Bezugszeichen versehen sind, ist rein prinzipiell eine Schneidvorrichtung 10 zum Zerkleinern von voluminösen Metallteilen 12, wie insbesondere Kraftfahrzeugkatalysatoren dargestellt. Bei Kraftfahrzeugkatalysatoren will man deren Gehäuse durchtrennen, um z. B. eine weitere mechanische Aufbereitung vorzunehmen. Allerdings ist die Erfindung auf solche nicht beschränkt.

Die Vorrichtung 10 umfasst eine stationär angeordnete Unterbacke 14 und eine zu dieser verschwenkbare Oberbacke 16. Unter- und Oberbacke 14, 16 weisen Schneidkanten 18, 20 auf, um die Metallteile 12 zu durchtrennen. Dabei wird beim Verschwenken der Oberbacke 16 deren Schneidkante 20 mit geringem Spalt entlang der Schneidkante 18 der Unterbacke 14 verschwenkt, wie dies von scherenartigen Trennvorrichtungen bekannt ist. Die Unterbacke 14 weist auf ihrer zur Oberbacke 16 abgewandten Seite eine erste Auflagefläche 22 für das zu zerkleinernde Metallteil auf.

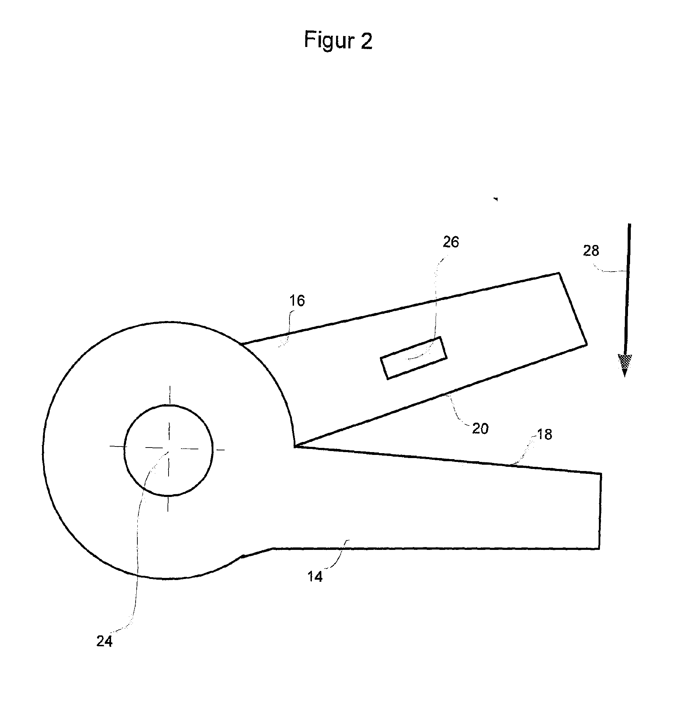

Wie sich aus der Fig. 2 ergibt, ist die Oberbacke 16 um eine Achse 24 zu der Unterbacke 14 verschwenkbar, so dass die Schneidkanten 18, 20 Schenkel eines V bilden, dessen Spitze achsenseitig verläuft.

Von der Oberbacke 16 geht ein Niederhalter 26 aus, der mit der Oberbacke 16 bevorzugterweise eine starre Einheit bildet. Es besteht jedoch auch die Möglichkeit, den Niederhalter 26 in der Oberbacke 16 derart zu lagern, dass eine Verstellbarkeit entgegen der Schneidschwenkrichtung (Pfeil 28) der Oberbacke 16 ermöglicht wird, um also in einem gewissen Umfang einem zu schneidenden Metallteil auszuweichen. Eine entsprechende Lagerung kann über Federn erfolgen.

Unabhängig hiervon verläuft auflagerseitig zugewandte untere Seite 27 des Niederhalters 26 in einem Abstand a zu der Schneidkante 20, der zumindest 5 cm groß ist. Hierdurch ist sichergestellt, dass das Trennen voluminöser Metallteile wie der Kfz-Katalysatoren 12 nicht behindert wird, gleichzeitig die Gefahr eines Quetschens unterbunden wird.

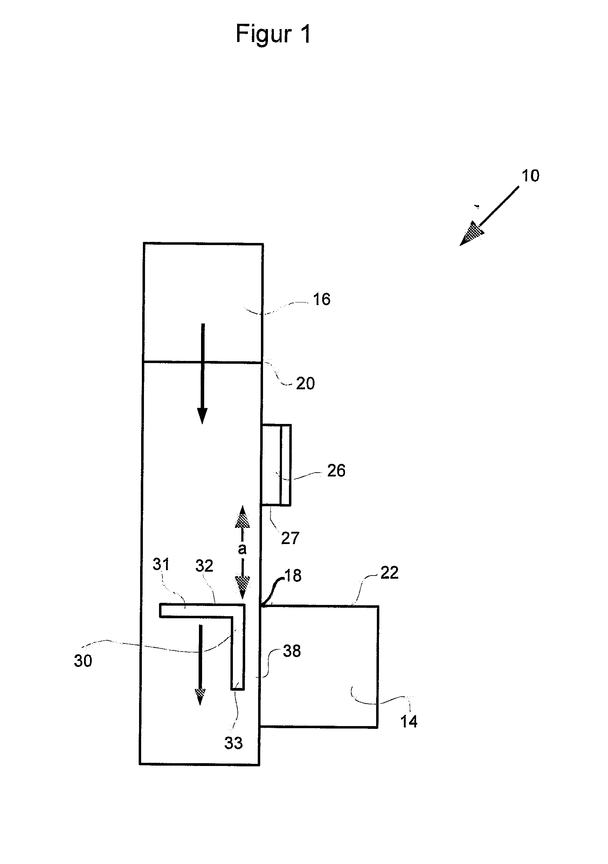

Des Weiteren verdeutlicht die Fig. 1, dass seitlich neben der Unterbacke 14, die oberseitig die Auflagefläche 22 zur Verfügung stellt, ein Auflager 30 für das zu zerkleinernde Metallteil verläuft, dessen Oberseite 32 im Ausgangszustand bündig oder nahezu bündig in die Auflagefläche 22 der Unterbacke 14 übergeht. Das Auflager 30 kann ein L-Profil sein, dessen horizontal verlaufender Schenkel 31 die Auflagefläche 32 bildet. Der von dem horizontalen Schenkel 31 senkrecht abragende Schenkel 33 ist vertikal ausgerichtet und erstreckt sich entlang auflagerseitiger Außenfläche 38 der Unterbacke 14.

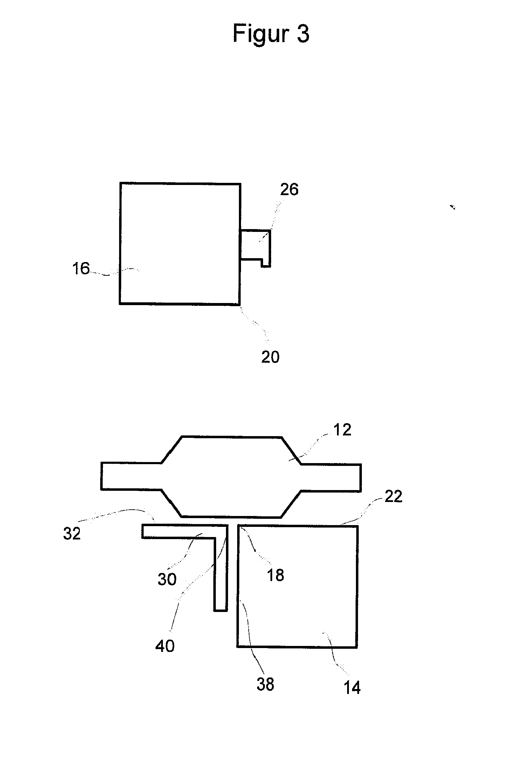

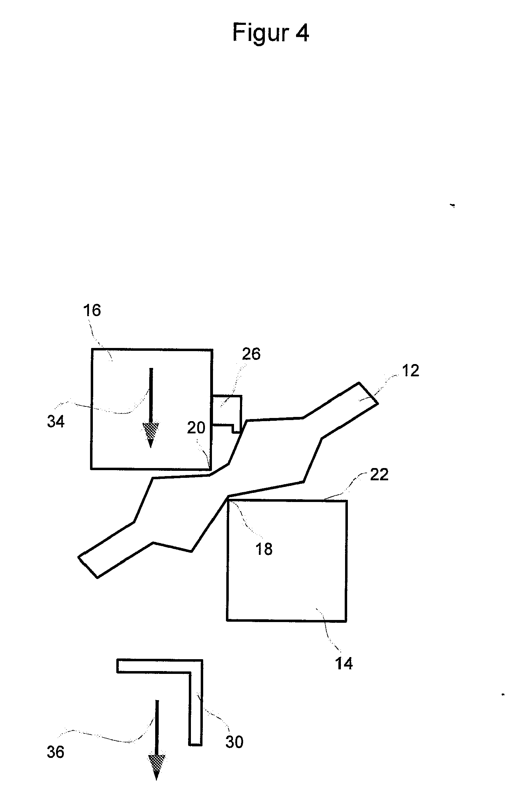

Wie die Fig. 3 verdeutlicht, bildet folglich das Auflager 30, d. h. dessen obere freie Fläche 32 mit der Auflagefläche 22 der Unterbacke 14 eine Gesamtauflage für den Katalysator 12, so dass ein sicheres Positionieren erfolgt, unabhängig davon, in welchem Umfang der Katalysator 12 über der Schneidkante 18 vorsteht oder nicht. Das Auflager 30 ist jedoch mit der Oberbacke 16 derart gekoppelt, dass beim Verschwenken der Oberbacke 16 das Auflager 30 synchron mitverstellt wird, wie die Pfeile 34, 36 in Fig. 4 verdeutlichen sollen. Somit stellt das Auflager 30 keine Behinderung beim Arbeitstakt Schneiden dar, kann jedoch in der Grundposition (Fig. 3) sehr nahe entlang der auflagerseitig verlaufenden Außenfläche 38 positioniert werden, so dass sich infolgedessen nur ein geringer Spalt zwischen dem Auflager 30 und der Unterbacke 14 eingehalten werden muss.

Aus der Fig. 4 wird des Weiteren ersichtlich, dass beim Schneiden der mitlaufende Niederhalter 26 ein Heraus- oder Wegspringen des Katalysators nach dessen Durchtrennen, also des Schnittguts verhindert, gleichzeitig jedoch sichergestellt ist, dass aufgrund der beim Schneidvorgang auftretenden Kippkräfte der oberhalb der Unterbacke 16 verlaufende Abschnitt des Katalysators 12 nicht derart in Richtung der Oberbacke 14 verschwenkt werden, dass sich die Gefahr eines Quetschens ergibt.

Der Niederhalter 26 kann unterbackenseitig strukturiert sein, um den Katalysator 12 zusätzlich zu fixieren, so dass beim Schneiden ein unkontrolliertes Verrutschen unterbleibt.

## Patentansprüche

1. Verfahren zum Zerkleinern von voluminösen Metallteilen (12), insbesondere von Kraftfahrzeug-Katalysatoren, mittels einer Schereneinrichtung (10) umfassend eine eine erste Schneidkante (18) aufweisende feststehende Unterbacke (14) mit dieser zugeordneter horizontal verlaufender ersten Auflagefläche (22) für das Metallteil und eine zu der Unterbacke verschwenkbare eine zweite Schneidkante (20) aufweisende Oberbacke (16), wobei die Schneidkanten zu Beginn des Zerkleinerns eine V-Form bilden,
**gekennzeichnet durch**
- das Positionieren des Metallteils (12) auf einer Auflage, die sich aus der ersten Auflagefläche (22) der Unterbacke (14) sowie einer seitlich neben dieser und in vertikaler Projektion unterhalb der Oberbacke (16) verlaufenden zweiten Auflagefläche (32) zusammensetzt, und
- Verschwenken der Oberbacke in Richtung der Unterbacke bei gleichzeitigem Verstellen der zweiten Auflagefläche zusammen mit der Oberbacke.

2. Verfahren nach Anspruch 1,
**dadurch gekennzeichnet,**
**dass** das Verstellen der zweiten Auflagefläche (32) synchron mit dem Verschwenken der Oberbacke (16) durchgeführt wird.

3. Verfahren nach Anspruch 1 oder 2,
**dadurch gekennzeichnet,**
**dass** das Metallteil (12) zu Beginn des Zerkleinerns zwischen den Schneidkanten (18, 20) der Unter- und Oberbacke (14, 16) fixiert wird.

4. Verfahren nach zumindest einem der vorhergehenden Ansprüche,
**dadurch gekennzeichnet,**
**dass** synchron mit der Bewegung der Oberbacke (16) ein Niederhalter (26) verstellt wird, der sich von der Oberbacke ausgehend entlang der ersten Auflagefläche (22) erstreckt und in Schwenkrichtung beabstandet zu der zweiten Schneidkante (20) verläuft.

5. Verfahren nach zumindest einem der vorhergehenden Ansprüche,
**dadurch gekennzeichnet,**
**dass** der Niederhalter (26) integral mit der Oberbacke (16) ausgebildet oder ortsfest bzw. unverrückbar mit dieser verbunden wird oder
**dass** der von der Oberbacke (16) ausgehende Niederhalter (26) in Schwenkbewegungsrichtung verstellbar gelagert von der Oberbacke ausgeht.

6. Verfahren nach zumindest einem der vorhergehenden Ansprüche,
**dadurch gekennzeichnet,**
**dass** die zweite Auflagefläche (32) starr mit der Oberbacke (16) verbunden wird.

7. Vorrichtung (10) zum Zerkleinern eines Kraftfahrzeug-Katalysators (12) umfassend eine eine erste Schneidkante (18) aufweisende Unterbacke (14) mit einer zugeordneten ersten Auflagefläche (22), eine zu der Unterbacke verschwenkbare Oberbacke (16) mit einer zweiten Schneidkante (20) sowie einen oberhalb der ersten Auflagefläche verlaufenden Niederhalter (26), wobei die erste und die zweite Schneidkante zu Beginn des Zerkleinerns eine V-Form bilden,
**dadurch gekennzeichnet,**
**dass** sich seitlich der ersten Schneidkante (18) eine die erste Auflagefläche (22) flächenmäßig erweiternde zweite absenkbare Auflagefläche (32) erstreckt, und/oder dass der Niederhalter (26) synchron mitlaufend mit der Oberbacke (16) ausgebildet ist und in Schwenkrichtung der Oberbacke auflagenseitig in einem Abstand a von der zweiten Schneidkante (20) verläuft.

8. Vorrichtung nach Anspruch 7,
**dadurch gekennzeichnet,**
**dass** die zweite absenkbare Auflagefläche (32) in Wirkverbindung mit der Oberbacke (16) steht.

9. Vorrichtung nach Anspruch 7 oder 8,
**dadurch gekennzeichnet,**
**dass** der Niederhalter (26) ein von der Oberbacke (16) seitlich abragender Vorsprung ist.

10. Vorrichtung nach einem der Ansprüche 7 bis 9,
**dadurch gekennzeichnet,**
**dass** der Niederhalter (26) integral mit der Oberbacke (16) ausgebildet ist.

11. Vorrichtung nach einem der Ansprüche 7 bis 10,
**dadurch gekennzeichnet,**
**dass** der Niederhalter 26) verstellbar in Schwenkbewegungsrichtung der Oberbacke (16) in dieser gelagert ist.

12. Vorrichtung nach einem der Ansprüche 7 bis 11,
**dadurch gekennzeichnet,**
**dass** der Niederhalter (26) auflageseitig strukturiert ist, insbesondere auflageseitig zahn- oder krallenartig strukturiert ist.

13. Vorrichtung nach Anspruch 8,
**dadurch gekennzeichnet,**
**dass** die zweite Auflagefläche (32) starr mit der Oberbacke (16) verbunden wird.

14. Vorrichtung nach Anspruch 8,
**dadurch gekennzeichnet,**
**dass** die zweite Auflagefläche (32) Außenseite eines horizontal verlaufenden Schenkels (1) eines Auflagers (30) vorzugsweise in Form eines L-Profils ist.

15. Vorrichtung nach Anspruch 8,
**dadurch gekennzeichnet,**
**dass** der Abstand a zwischen dem Niederhalter (26) und der zweiten Schneidkante (20) beträgt a ≥ cm, vorzugsweise a ≥ cm, insbesondere 5 cm ≤ a ≤ 10 cm.
